# EUROPEAN PATENT APPLICATION

(11) **EP 3 210 872 A1**
(43) Date of publication of application: **30.08.2017**
(21) Application number: 16157842.2
(22) Date of filing: 29.02.2016
(51) Int. Cl.: B62M 6/45, B62M 6/55

(54) **ONE-WAY CLUTCH FOR ELECTRICALLY POWERED BICYCLE WITH COASTER BRAKE**

(71) Applicant: Pro-Movec A/S, 8240 Risskov (DK)
(72) Inventor: The designation of the inventor has not yet been filed
(74) Representative: Budde Schou A/S

(57) **Abstract**

This invention relates to a one-way clutch (1) for coupling an electric center motor (10) into and out of engagement with a drive of an electrically powered bicycle (100) with a coaster brake, wherein the one-way clutch (1) comprises
- at least one displacement member (60) journaled in a bearing (70) through a portion of either a sprocket member (31) or a drive disc (50);
- a first cavity (80) formed in a portion of a crank arm disc (41), and configured to receive and engage a first portion of the engagement member (60); and
- a plurality of second cavities (90) configured to receive and engage a second portion of the engagement member (60),
wherein the plurality of second cavities (90) is formed in the opposite of the sprocket members (31) and the drive disc (50) which has the at least one bearing (70) formed therein, and
wherein the engagement member (60) is linearly slideably relative to the bearing (70) between a first position, where a first portion of the engagement member (60) is received in and engages the first cavity (80), and where the engagement member (60) is disengaged from the second cavity (90); and a second position, where a second portion of the engagement member (60) is received in and engages the second cavity (90), and where the engagement member (60) is disengaged from the first cavity (80).

## Description

The present invention relates to a one-way clutch for connecting and disconnecting an electric center motor to and from a drive of an electrically powered bicycle with a coaster brake. The invention further relates to an electrically powered bicycle with a coaster brake with such a one-way clutch, and to a method of connecting and disconnecting an electric center motor to and from a drive of an electrically powered bicycle with a coaster brake, using a one-way clutch.

### Background of the invention

Increasingly, bicycles are equipped with electric motors. Electrical motors may be coupled to the pedal crank or the rear axle of a bicycle. Typically, the electric motor is arranged to aid pedaling. Therefore, many electrical motor equipped bicycles are configured such that the motor kicks in, when the bicyclist rotates the pedals in one (forward) direction and is uncoupled, when the bicyclist stops pedaling, or treads to provide a counter rotation of the pedals in order to brake the bicycle. Braking by counter rotating the pedals is common in many types of bicycles, both regular and electrically driven, and is known as a 'coaster brake'. A 'coaster brake' is also known as a 'back pedal brake' or 'foot brake'. Many electric bicycles are driven by a center motor, which is connected to the pedal drive at the front sprocket/chain ring with the pedal crank.

It is a problem with the prior art clutches for the type of electrically driven bicycles with a center motor and a coaster brake/foot brake that, when the counter rotation of the pedals is begun, the inertia of the electric motor gives a "kick-back". This gives a very unpleasant feeling for the bicyclist experiencing the kick-back, and the phenomenon may cause dangerous situations if the bicyclist is startled by the kick-back. Therefore, it is desirable that kick back is completely avoided, or at least reduced.

An example of a clutch system for coupling an electrical motor in and out of engagement with a pedal drive is disclosed in EP 2 384 962 A1. EP 2 384 962 A1 discloses a "back pedal gear". The gear or transmission has a helical screw drive attached between a foot pedal connection shaft and a drive connection element. It comprises a guide in form of a helical section with constant or variable pitch. A coupling element switchably connects a motor connection shaft with the drive connection element, and is connected with the screw drive in an axial force-transmitting manner. The coupling element separates the motor connection shaft from the drive connection element during negative torsional movement between the foot pedal connection shaft and the connection element. EP 2 384 962 A1 also concerns a method for controlling coupling of a drive and a motor of an electric bicycle.

The coupling provided in EP 2 384 962 A1 provides a displacement in an axial direction of the crank arm and sprocket when shifting between forward and backwards rotation of the pedaling. This results in a spacious solution, which in itself is inconvenient. Further, an axial movement of the crank arm, and thereby one of the pedals, provides an uncomfortable feeling for the bicyclist/user.

The coupling provided in EP 2 384 962 A1 is also of a very complex structure, which takes up a lot of space, and which is difficult to service and maintain. Further, the complex structure does not allow retrofitting.

Another example of coupling an electric motor to a bicycle drive is shown in US 7,370,720 B2. Also this coupling is very intricate and space consuming, expensive to manufacture and to service/maintain. Further, the entire solution is so specialized that the crank section of the bicycle needs to be specially manufactured, which does not allow retrofitting.

The present invention provides a solution that overcomes the problem of the prior art. The present invention allows for coupling the sprocket and the motor when forward pedaling is provided by the bicyclist. Thereby the center motor aids the propulsion. When there is no trot in the pedals, the motor and the sprocket are automatically and immediately uncoupled, such that no kick-back can be transferred to the pedal crank arm when the pedals motion is completely reversed to apply the brake. The inventive clutch is provided between the sprocket and the electric motor, whereby it becomes independent of motor-type, and further becomes applicable for retrofitting.

### Disclosure of the invention

In view of these objects, in a first aspect, the invention relates to a one-way clutch for connecting and disconnecting an electric center motor to and from a drive of an electrically powered bicycle with a coaster brake, the drive comprising
- a drive shaft having a longitudinal axis
- a sprocket arranged coaxially with the drive shaft;
- a crank arm arranged on the drive shaft; and
- an endless chain arranged over the sprocket,
wherein the one-way clutch comprises
- a sprocket member for transferring rotation from the one-way clutch to the sprocket;
- a crank arm disc for transferring rotation from the crank arm to the sprocket;
- a drive disc for transferring rotation from the electric center motor to the sprocket, the drive disc being rotatable relative to the crank arm disc and the sprocket member;
- at least one displacement member journaled in a bearing through a portion of either the sprocket member or the drive disc;
- a first cavity formed in a portion of the crank arm disc, and configured to receive and engage a first portion of the engagement member; and
- a plurality of second cavities configured to receive and engage a second portion of the engagement member,
wherein the plurality of second cavities is formed in the opposite of the sprocket member and the drive disc wherein the at least one bearing is formed, and
wherein the at least one engagement member is linearly slideably relative to the bearing between
- a first position, where a first portion of the displacement member is received in and engages a first cavity, and where the displacement member is disengaged from any one of the second cavities; and
- a second position, where a second portion of the displacement member is received in and engages one of the second cavities, and where the displacement member is disengaged from the first cavity.

Thereby, a very simple, durable an easily serviceable one-way clutch is provided. The one-way clutch further avoids or minimizes the problem of kick-back, experienced by a user/bicyclist.

In one embodiment, the first cavity is shaped such that the engagement member is forced out of engagement with the first cavity and displaced toward engagement with the second cavity, when the crank arm is rotated in a first direction.

Additionally or alternatively, in a further embodiment the second cavity may be shaped such that the engagement member is forced out of engagement with the second cavity and toward engagement with the first cavity when the crank arm is rotated in a second direction opposite to the first direction.

In an embodiment, the at least one displacement member is displaceable from the at least one first cavity by a ledge, forming a transition from a straight bottom surface portion of the at least one first cavity and a surface of the crank arm disc in which the at least one first cavity is formed.

In a further embodiment, the crank arm disc is rotatable relative to the sprocket member in a limited angle only. Thereby, a very simple and efficient way of providing braking is provided. The limited rotation may be provided by at least one protrusion on one of the sprocket member or the crank arm disc, and the at least one protrusion is configured for cooperating with at least one slit provided in the other of the sprocket member or the crank arm disc.

In further embodiments, the sprocket member, the crank arm disc, the drive disc, and the displacement member of the one-way clutch may in addition to any of the previously mentioned embodiments form an exchangeable entity, where the sprocket member comprises means for rotation-fast connection to the sprocket, where the crank arm disc comprises means for rotation-fast connection to the crank arm, and wherein the drive disc comprises means for connecting to a drive output of the electric center motor.

In one embodiment, the displacement member is slideable in an axial direction parallel to the axis of the drive shaft. In connection with this embodiment, the at least one bearing may be formed through the sprocket member, the at least one first cavity may be formed in an axially inwardly facing surface of the crank arm disc, and the second plurality of cavities may be formed in an axially outwardly facing surface of the drive disc.

In further embodiments, alternative to the above-mentioned embodiments, where the displacement member is slideable in an axial direction, the displacement member may be slideable in a radial direction perpendicular to the axis of the drive shaft. In further embodiments thereof, the at least one bearing is formed through the drive disc, the at least one first cavity is formed in a radially outwardly facing surface of a ring-shaped crank flange of the crank arm member, and the plurality of second cavities may be formed in a radially inwardly facing surface of the crank arm member.

Thereby a particularly durable one-way clutch is provided.

In connection with any of the previously mentioned embodiment, there may be one first cavity for every one displacement member and every one bearing.

In preferred embodiments, a sensor may further be arranged in the one way clutch, where the sensor is configured for turning on the electric center motor, when a forward rotation of the crank arm is detected by the sensor, and for turning off the electric center motor, when no rotation or a backwards rotation of the crank arm is detected by the sensor.

In an embodiment, the sensor is arranged in connection with a rotation limiting mechanism between the sprocket member and the crank arm disc.

The objects of the invention may - in a second aspect of the invention -further be achieved by an electrically powered bicycle with a coaster brake and a one-way clutch for connecting and disconnecting an electric center motor to and from engagement with a drive of the electrically powered bicycle, the drive comprising
- a drive shaft having a longitudinal axis;
- a sprocket arranged coaxially with the drive shaft;
- a crank arm arranged on the drive shaft; and
- an endless chain arranged over the sprocket,
wherein the one-way clutch comprises
- a sprocket member for transferring rotation from the one-way clutch to the sprocket;
- a crank arm disc for transferring rotation from the crank arm to the sprocket;
- a drive disc for transferring rotation from the electric center motor to the sprocket, the drive disc being rotatable relative to the crank arm disc and the sprocket member;
- at least one displacement member journaled in a bearing through a portion of either the sprocket member or the drive disc;
- a first cavity formed in a portion of the crank arm disc, and configured to receive and engage a first portion of the displacement member; and
- a plurality of second cavities configured to receive and engage a second portion of the displacement member,
wherein the plurality of second cavities is formed in the opposite of the sprocket member or the drive disc wherein the at least one bearing is formed, and
wherein the at least one displacement member is linearly slideably relative to the to the bearing between
- a first position, where a first portion of the displacement member is received in and engages a first cavity, and where the displacement member is disengaged from any one of the second cavities; and
- a second position, where a second portion of the displacement member is received in and engages a second cavity, and where the displacement member is disengaged from the first cavity.

In embodiments of the second aspect of the invention, a sensor may be arranged in connection with the drive of the electrically powered bicycle. The sensor is configured for turning on the electric center motor when a forward rotation of the crank arm is detected by the sensor, and for turning off the electric center motor when no rotation or a backwards rotation of the crank arm is detected by the sensor.

The sensor may be a torque or strain gauge sensor. The sensor may be provided between parts of the drive e.g. the drive shaft and the crank arm. Alternatively, the sensor may be provided on a single part, such as the crank arm or the drive shaft. In an embodiment, the sensor may be provided in the one-way clutch.

Regardless of the position of the sensor, the sensor is preferably connected to communicate with an electronic control unit or the electric motor, in order to transfer a signal indicative of a rotation of the crank arm/pedals, i.e. pedaling by a user/bicyclist.

In embodiments of this second aspect of the invention, the electrically powered bicycle may comprise any of the further features of the embodiments mentioned in connection with the one-way valve according to the first aspect of the invention, described above.

The objects of the invention may - in a third aspect of the invention -further be achieved by a method of connecting and disconnecting an electric center motor to and from engagement with a drive of an electrically powered bicycle with a coaster brake by a one-way clutch, the drive comprising
- a drive shaft having a longitudinal axis;
- a sprocket arranged coaxially with the drive shaft;
- a crank arm arranged on the drive shaft; and
- an endless chain arranged overs the sprocket,
wherein the one-way clutch comprises
- a sprocket member for transferring rotation from the one-way clutch to the sprocket;
- a crank arm disc for transferring rotation from the crank arm to the sprocket;
- a drive disc for transferring rotation from the electric center motor to the sprocket, the drive disc being rotatable relative to the crank arm disc and the sprocket member;
- at least one displacement member journaled in a bearing through a portion of either the sprocket member or the drive disc;
- a first cavity formed in a portion of the crank arm disc, and configured to receive and engage a first portion of the displacement member; and
- a plurality of second cavities configured to receive and engage a second portion of the displacement member,
wherein the plurality of second cavities is formed in the opposite of the sprocket member or the drive disc wherein the at least one bearing is formed, and
wherein the method comprises linearly sliding the at least one displacement member relative to the bearing, between
- a first position, where a first portion of the displacement member is received in and engages the first cavity, and where the displacement member is disengaged from any of the second cavities to disconnect the electric motor from the drive; and
- a second position, where a second portion of the displacement member is received in and engages one of the second cavities, and where the displacement member is disengaged from the first cavity to connect the electric center motor to the drive.

In embodiments of this third aspect of the invention, the method of connecting and disconnecting an electric center motor to and from engagement with a drive of an electrically powered bicycle may comprise any of the further features of the embodiments mentioned in connection with the one-way valve according to the first aspect of the invention or the bicycle according to the second aspect of the invention, described above. In further embodiments thereof, the features of the embodiments mentioned in connection with the one-way valve according to the first aspect of the invention, described above may be used in steps of the method according to the third aspect of the invention.

Further objects, features, advantages and properties of the one-way clutch, the electrically powered bicycle, and the method according to the present invention will become apparent from the detailed description below.

### Brief description of the drawings

The invention will now be explained in more detail by means of examples of embodiments with reference to the schematic drawing, in which
Fig. 1, in a side view, shows an electrically powered bicycle;
Fig. 2, in a perspective view, shows an electric motor for an electrically powered bicycle, along with a sprocket, a crank arm, and a one way coupling according to the invention;
Figs. 3A-F, in a partly sectional top view, shows components of a drive system with an embodiment of a one-way clutch according to the invention in various stages;
Fig. 4 shows a crank arm with a crank arm disc for a one-way clutch according to an embodiment of the invention;
Fig. 5, in a side view, shows a crank arm, a drive disc, and a sprocket of the one-way clutch according to an embodiment of the invention, as seen from the frame side of a bicycle;
Fig. 6A, in an exploded perspective view, shows elements of a one-way clutch according to another embodiment;
Fig. 6B, in an exploded perspective view, shows the same elements of a one-way clutch as in Fig. 6B, but from a different angle;
Fig. 7, in a horizontal sectional view, shows elements of the Figs. 6-B embodiment in an assembled state;
Figs. 8A-C, in a partially sectional view, shows the inter-relative positions of the elements of the Figs. 6-B embodiment, in various stages of forward pedaling and braking.

### Detailed description of embodiments of the invention

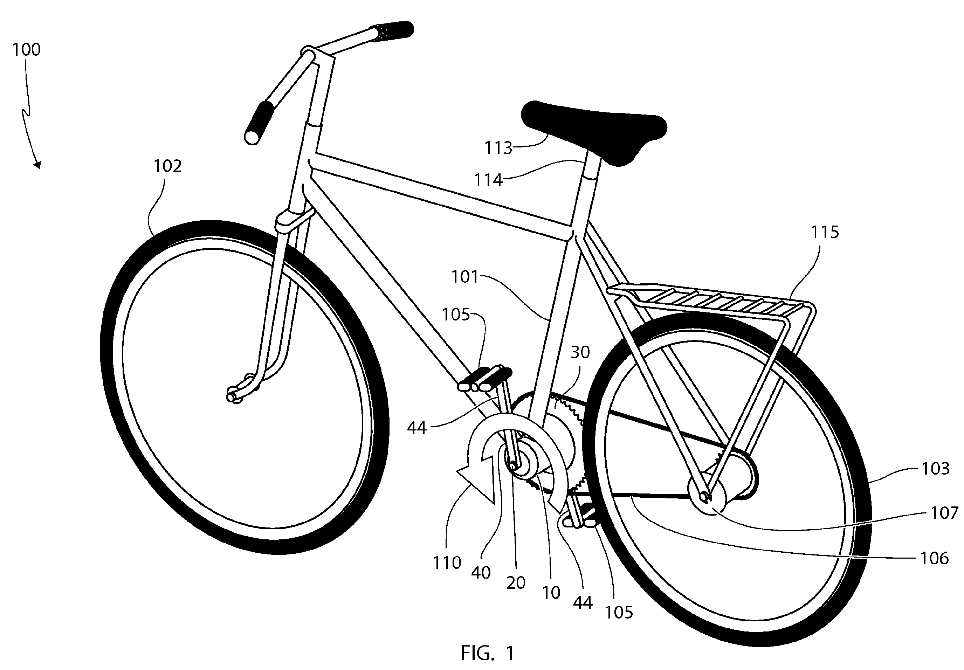

Fig. 1 shows an electrically powered bicycle 100. The electrically powered bicycle comprises a frame 101, a front wheel 102, a rear wheel 103, a handle bar 104, and a main sprocket 30 arranged in connection with a crank arm 40, equipped with pedals 105, arranged for propelling the bicycle my a bicycle user, i.e. a bicyclist.

The electrically powered bicycle comprises a drive, the drive comprising a drive shaft 20 having a longitudinal axis, A, a sprocket 30 arranged coaxially with the drive shaft 20, a crank arm 40 arranged on the drive shaft 20, and an endless chain 106 arranged over said sprocket 30.

The drive shaft 20 is rotatably supported in a lower central portion of the frame 101, and a left and a right end of the drive shaft 20 are fitted with pedals 105 via crank arms 40. This drive shaft 20 is coaxially fitted with the main sprocket 30 via a one-way clutch 1 (not shown in Fig. 1; see further details below) for transmitting the revolution of the crank arms 40 and main sprocket 30 exclusively in the direction indicated by the arrow 110 in Fig. 1, corresponding to the forward driving direction of the bicycle.

The main sprocket (herein after denoted sprocket 30) is - via an endless chain 106 - mounted on a drive shaft 20, and connected to a rear sprocket 107, arranged at a hub of the rear wheel 103.

By a trot in the pedals 105 by the bicyclist, the crank arm 40, the sprocket 30 and the drive shaft 20 may be forced to rotate in the direction of the arrow 110. Thereby power is transferred via the chain 106 to the rear sprocket 107, and consequently to the rear wheel 103. Thereby, the bicycle may be propelled forward (in Fig. 1 this is toward the right in the figure).

The electrically powered bicycle is of the type having a coaster brake. A coaster brake is a type of drum brake integrated into the back hub with an internal freewheel. Thereby the electrically powered bicycle has a freewheeling function as with other systems, where -when back pedaled - the brake engages after a fraction of a revolution. Coaster brakes can be found in both single-speed and internally geared hubs.

The electrically powered bicycle 100 further comprises an electric motor 10. The electric motor 10 is a center motor.

An electric center motor 10 in electrically powered bicycles is a motor that engages the main sprocket, which is also connected to the crank arm (pedal crank arm) of the bicycle. The electric center motor 10 thereby may aid a bicyclist in propelling the bicycle.

The electric center motor 10 comprises a drive output 109, which is connectable to the crank arm 40.

The electrically powered bicycle further may comprise a power source in the form of a battery (not shown) for the electric motor. The battery may be removably attached to the electrically powered bicycle 1 at a suitable location. For example, the battery may be attached to a seat post 114 under a saddle 113, on or under a rear luggage carrier 115.

The electrically powered bicycle 100 of the illustrated embodiment may be provided with a control for assisting the pedal effort at an assist ratio (assisting power/pedal effort) that is determined from at least a bicycle running speed and the pedal effort. The control system of the electrically powered bicycle 100 preferably comprises a microcomputer (not shown), which provides a control of the electronic processes of the bicycle, especially the electric motor 10.

The microcomputer may receive as input signals at least a revolving speed signal from a sensor 160 arranged in connection with a drive of the bicycle 100, e.g. on a drive shaft 20, a crank arm 40 or in the one-way clutch 1, for calculating a running speed and strain gauge signals used for calculating the pedal effort. Means for generating those input signals are known in the art and will not be described in further details. The microcomputer calculates the running speed and the pedal effort from those input signals and executes the electronic processing for determining the assist ratio based on a predetermined algorithm. Subsequently, the microcomputer sequentially outputs pulse signals to provide an instruction to the electric motor 10 to generate the assisting power in association with the determined assist ratio.

It is known in the art to include a sensor suitable for detecting when force is applied by a user/bicyclist to the pedals. Such a sensor may for example be a torque sensor. When a force is applied to the pedals 105, and torque is thereby induced in the crank arm 40 and the sprocket 30, the sensor senses the torque or the motion, and sends a signal to the microprocessor, which subsequently sends a control signal to the electrical motor 10 in order to activate the electric motor 10. Alternatively, the sensor sends a start signal directly to the electric motor 10.

When, the bicyclist stops applying force to the pedals 105 (stops trotting), or reverses the rotation in order to engage the coaster brake, the sensor or sensors sense the lack of forward torque or motion, and/or senses a rearward torque or motion, and sends a stop signal to the microprocessor, which in turn switches off the electrical motor. Alternatively, the sensor sends a signal to the electric motor 10, which will turn off the electric motor 10.

The description of the sensor function immediately above applies to prior art electrically powered bicycles, but similar sensors and sensor functions are utilized in connection with the one-way coupling according to the present invention. In the prior art systems, it is a problem that the control system is not capable of switching off the electrical motor quickly enough. Even a slight delay may cause the bicyclist to experience the feeling of a "kick back". The one way coupling according to the present invention, at least overcomes this problem.

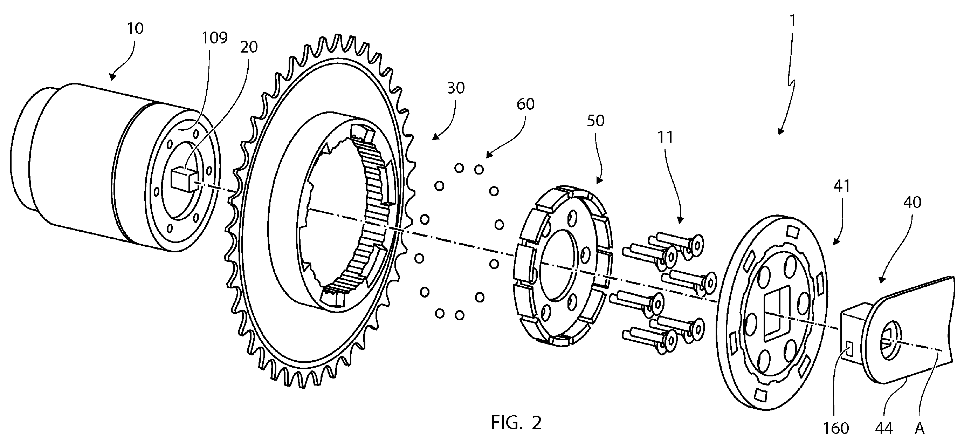

In the present invention, the sensor 160 (see Fig. 2) may be arranged in connection with the drive of the electrically powered bicycle, or it may be arranged in the one-way clutch 1. The sensor 160 is configured for turning on the electric center motor 10 when a forward rotation 110 of the crank arm 40 is detected by the sensor 160, and for turning off the electric center motor 10 when no rotation or a backwards rotation 120 of the crank arm 40 is detected by the sensor 160.

The sensor 160 may be a torque or strain gauge sensor. The sensor 160 may be provided between parts of the drive e.g. the drive shaft 20 and the crank arm 40. Alternatively, the sensor 160 may be provided on a single part, such as the crank arm 40 or the drive shaft 20. In another embodiment, the sensor 160 may be provided in the one-way clutch 1.

Regardless of the position of the sensor, the sensor 160 is preferably connected to communicate with an electronic control unit or the electric motor 10, in order to transfer a signal indicative of a rotation of the crank arm 40/pedals 105, i.e. pedaling by a user/bicyclist. The connection may be through suitable wires or wirelessly via suitable wireless technology.

Fig. 2 shows a one-way clutch 1 arranged between a motor 10 with a drive output 109, a sprocket 30 and a crank arm 40. The one way clutch 1 according to the invention may have constituent parts being part of the drive output 109, the sprocket 30 or the crank arm 40, or the one-way clutch may form a unit, which may be mounted to couple the drive output 109, the sprocket 30 and the crank arm 40 together.

In the following, various embodiments of the one way clutch 1 according to the invention is described in further detail.

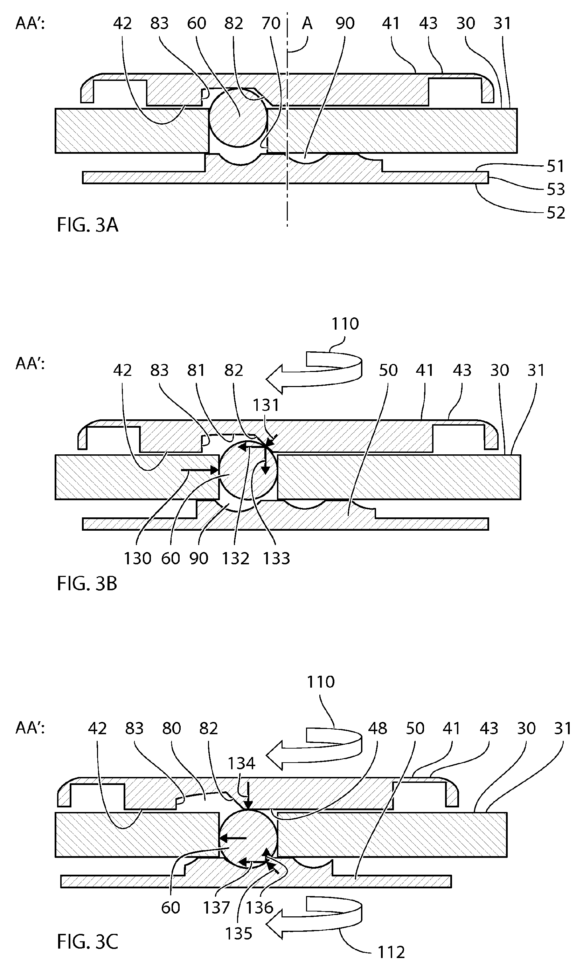

Figs. 3A-F, in a horizontal partial section, show the one-way clutch in a first embodiment, and in various positions. For simplicity, Figs. 3A-F show only the most important constituent parts.

Fig. 3A shows the embodiment of the one-way clutch in a neutral position, where the bicyclist is not applying a force in the pedals 105, and therefore not inducing any rotation in the crank arm 40.

The one-way clutch 1 only allows the electric motor 10 to apply forward rotation of the sprocket 30, when the crank arm 40 is rotated in the forward direction by the user/bicyclist. If the user/bicyclist stops rotating the pedals and drive shaft in the forward direction, the electric motor 10 is decoupled.

Figs. 3A-F show a drive disc 50, which may be the same as the drive output 109, or form a part which may be mounted thereto. Figs. 3A-F further show a portion of a sprocket 30, and a portion of a crank arm 40 with a crank arm disc 41.

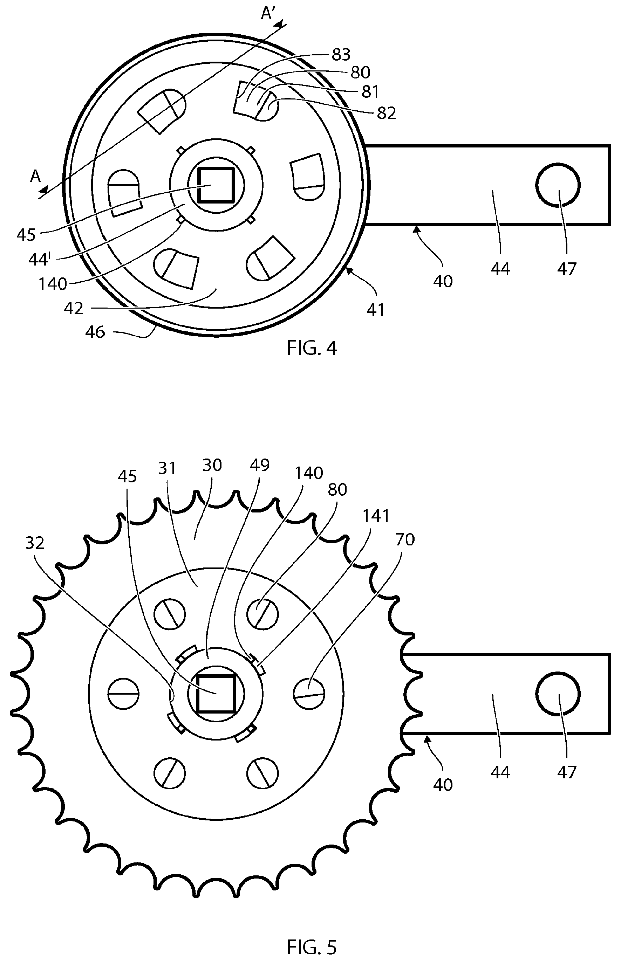

The portion of the sprocket 30 shown in the Figs. 3A-F may form an integral part of the sprocket, or preferably, as shown in e.g. Fig. 5, the shown portion of the sprocket 30 is a sprocket member 31 on which the sprocket 30 is mounted in rotation fast manner, such that the sprocket member 31 and the sprocket 30 is prevented from rotating relative to one another. In the latter case, the sprocket member 31 may form part of a replaceable unit or assembly forming the one-way clutch 1. The sprocket 30 and the sprocket member 31 may be rotation-fast connected relative to each other in a number of ways, e.g. by press fit, mechanical fasteners like screws or pals, or via corresponding shapes of a central aperture (not shown) of the sprocket 30 and the outer surface of the sprocket member 31.

The crank arm 40 comprises a crank arm disc 41 and crank arm shaft 44 (see Fig. 4), the crank arm shaft 44 connecting the crank arm disc with the pedals 105. The crank arm shaft 44 may be formed integral with the crank arm disc 41, or preferably, the crank arm shaft 44 and the crank arm disc 41 may be formed as two separate connectable components, that may be connected in a rotation fast manner relative to each other. Thereby, the crank arm disc may form part of a unit or assembly forming the one-way clutch 1.

The crank arm 40 and the crank arm disc 41 are mountable on the drive shaft 20 (which for simplicity is not shown in Figs. 3A-F) in a rotation fast manner relative to each other, and in such a way that a rotation of the crank arm 40 and the crank arm disc 41 (relative to the frame 101) will cause a rotation of the drive shaft 20.

The sprocket 30 is mounted coaxially around the drive shaft 20 (not shown), such that the sprocket 30 is freely rotatable relative to the drive shaft 20, and coaxially with and adjacent to the crank arm disc 41.

However, the rotation of the sprocket 30 relative to the adjacent crank arm disc 41 (and thereby the crank arm 40), is limited, such that the relative rotation between the sprocket 30 and the crank arm disc 41 is only a few degrees, such as 5-30°, as described a little further below with reference to Fig. 5.

In Figs. 3A-F, further, the drive disc 50 is mounted coaxially and around the drive shaft 20 (not shown), such that the drive disc 50 is freely rotatable relative to the drive shaft 20, and coaxially with and adjacent to the sprocket 30. Thus, in this embodiment, the sprocket 30 can be said to be sandwiched between the sprocket 30 and the crank arm disc 41 in the axial direction. The drive disc 50 may be coupled to the sprocket 30 and to the crank arm disc 41, and decoupled therefrom, as further described in the following.

As further shown in Figs. 3A-F, at least one hole/aperture may be formed in and through the sprocket 30, the hole/aperture forming a bearing 70 configured for slideably guiding a displacement member 60. The displacement member 60, in the form of spherical object, such a solid steel ball, is arranged snugly in the bearing 70, and displaceable in the axial direction parallel to the longitudinal axis A of the drive shaft 20.

In other embodiments (not shown), and dependent on the thickness (in the axial direction) of the sprocket, the displacement member 60 may take the form of an elongate object, such as a cylinder with semi-spherical ends, or more generally, the elongate object may have any cross-sectional shape, as long as the ends are rounded, or at least configured to cooperate with the shapes of a set of engagement sockets as described in the following.

Fig. 4, in a perspective view, shows a crank arm 40 similar to the crank arm 40, shown in Figs. 3A-F, the crank arm 40 comprising a crank arm disc 41 and a crank arm shaft 44. The crank arm disc 41 has an inner side 42, which when mounted in the one-way clutch 1, as shown in e.g. Figs. 3A-F, faces the sprocket 30. The crank arm disc 41 further has an opposite outer side 43 (visible in Figs. 3A-F). A crank arm shaft 44 is coupled to the outer side 43.

At least one engagement socket in the form of a first cavity 80 or indentation is formed in the inner side/surface 42.

In Fig. 4, the crank arm 40 is shown from a view, where the inner side/surface 42 of the crank arm disc 41 is visible. The outer side 43 thus cannot be seen. However, from Fig. 4, it will be appreciated, that the crank arm shaft 44 extends in a radial direction on the outer side 43 in a plane parallel to the crank arm disc 41, and connected on the outer side/surface 43.

Fig. 4 also shows a center bore 45 for receiving the drive shaft 20 (not shown in Fig. 4), the center bore 45 being formed in the crank arm 40. The center bore 45 extends through the radially innermost part of the crank arm shaft 44, a drive shaft connection member 49 of which is shown in Fig. 4. The center bore 45 has a square cross section, such that it can be mounted on the drive shaft 20 in a rotation fast manner, by the drive shaft having a corresponding square cross-sectional shape. In other embodiments other corresponding cross-sectional shapes of the drive shaft 20 and center bore 45 may be utilized.

In embodiments, where the crank arm disc 41 forms part of a replaceable one way clutch unit/assembly, the crank arm disc 41 preferably also has a central bore 45', which may be attached to a drive shaft connection member 49. The central bore 45' allows the coaxial mounting of the crank arm disc 41 around the drive shaft connection member 49. The central bore 45' of the crank arm disc 41 may have a shape corresponding to the outer shape of the drive shaft connection member 49 in order to allow a rotation-fast connection thereto.

Fig. 4 further shows that six first cavities 80 or indentations are formed in the inner side/surface 42. In other embodiments (not shown), another number of first indentations may be used, such as 1-5 or 7-10. As mentioned above, at least one first cavity 80 is arranged in the crank arm disc 41. The first cavities 80 are formed in a circle at a radial distance away from the axis A of the crank arm disc (as defined through the middle of the center hole 45, and coinciding with the longitudinal axis A, of the drive shaft 20 when the crank arm disc 41 is mounted thereon).

Preferably, the one or more first cavities 80 is/are formed in the vicinity of the outer circumferential rim 46 of the crank arm disc 41. Preferably the one or more first cavities 80 is/are formed at a distance of an outer 1/3 of the distance from the central axis A to the circumferential rim 46.

A hole 47 for mounting a (not shown) pedal 105 further is shown in Fig. 4.

The at least one first cavity 80 is shaped and sized to receive a portion of the displacement member 60. The shape of the first cavity/cavities 80 is described in further detail below.

The number of first cavities 80 in the crank arm disc 41 matches the number of bearings 70 in the sprocket 30.

Now returning to the limitation in the rotational movement between the crank arm 40 and the sprocket member 31. The limitation in relative motion between the sprocket member 31 and the crank arm disc 41 may be provided by suitable means, one example of such being shown in Fig. 5.

Fig. 5, shows a partial assembly of elements of a one- way clutch 1 and parts of the chain drive of an electrically powered bicycle. The partial assembly shown comprises a crank arm 40 and a sprocket 30 with a sprocket member 31. The crank arm 40 may be the crank arm 40 as described in connection with Fig. 4 above. The sprocket 30 with the sprocket member 31 is aligned with the crank arm 40 as it would be when mounted on a drive shaft of an electrically powered bicycle. In the chosen view, the sprocket 30 with the sprocket member 31 almost hides the entire crank arm 40. However, the crank arm shaft 44 with the hole 47 for mounting a pedal 105 can be seen extending from behind the sprocket 30. Also, the drive shaft connection member 49 of the crank arm 40 is visible through a central throughgoing aperture 32 in the sprocket member 31. In further embodiments, the sprocket member may form an integrated portion of the sprocket 30. In this case, the central, throughgoing aperture can be said to be formed in the sprocket itself.

Further, the first cavities 80, which are formed in the crank arm disc 41 are visible through the six apertures formed in a circle around the central throughgoing aperture 32 in the sprocket member 31. These apertures form the bearings 70 for the displacement members 60. The displacement members are not shown in Fig. 5. In each of the first cavities 80 visible through the bearings 70, a flat portion 81 of the inner surface of the first cavities 80 as well as a sloping portion 82 of the inner surface of each of the first cavities 80 can also be seen.

In order to limit the rotational movement between the crank arm 40 and the sprocket member 31, one or more protrusions, studs, or knobs may be formed on either the sprocket member 31 or the crank arm 40, and extending in a direction towards the other of the sprocket 30 and the crank arm 40. These protrusions, studs, or knobs are configured to cooperate with respective elongate slits, grooves or channels of a suitable length, formed in the sidewall or in an edge of the opposite one of the sprocket 30 and the crank arm 40, where the protrusions, studs or knobs are formed.

In the embodiment shown in Fig. 5, radially extending protrusions 140 (also visible in Fig. 4) are formed on an outer surface of the drive shaft connection member 49 of the crank arm 40. The protrusions cooperate with elongate slits 141 formed in an inwardly facing edge (circumference) of the central throughgoing aperture 32 in the sprocket member 31. It will be appreciated, that the protrusions 140 and slits 141 may be reversed between drive shaft connection member 49 and the sprocket member 31 in other embodiments (not shown). Further, it may be appreciated that the protrusions 140 may alternatively be provided in an axial direction, extending from a side surface of the sprocket member 31 or the crank arm disc 41, and cooperating with slits 141 formed in a sidewall of the opposite one of the sprocket member 31 or the crank arm disc 41.

It will further be appreciated from Fig. 5 that the limited rotational movement between the crank arm 40 and the sprocket 30/sprocket member 31 is achieved by the slits having a finite length, which will provide stops for the displacement of the protrusions 140, when the protrusions are slideably displaced from one end of slits 141 to another. The length of each of the slits/grooves/channels 141 is configured such that the relative moment is limited between two extreme positions shown in Fig. 3A and Fig. 3C, respectively, as will be explained in further detail below. The limitation is a consequence of the protrusions/studs/knobs 140 reaching the ends of the elongate slits/grooves/channels 141.

For simplicity, in Figs. 3A-F the mechanism for limiting the rotational movement between the crank arm 40 and the sprocket member 31 has not been shown.

Now returning to Figs. 3A-F, the drive disc 50, has a first side/surface 51 facing the sprocket 30, and an opposite side/surface 52 facing away from the sprocket, and a circumferential rim 53. Fig. 3A further shows the axis A of the drive disc 50, the sprocket 30, and the crank arm disc 41, the axis A coinciding with the axis A of the drive shaft 20 (when the drive disc 50, the sprocket 30, and/or the crank arm disc 41 are mounted thereon), the drive shaft not being shown in the figure. Preferably, the side/surface 52 facing away from the sprocket 30, or the circumferential rim 53, comprises means for connecting the drive disc 50 to the output drive 109 of the electric motor 10 (or as mentioned above, the drive disc 50 may be the output drive 109).

The drive disc 50 further has one or more engagement sockets, formed by second cavities 90, preferably in the form of concave indentations formed in the first side/surface 51. The second cavities preferably form concave, part-spherical indentations in the first side/surface 51, or at least with a shape corresponding to an outer surface of a portion of the displacement member(s) 60. The second cavities 90, thereby are configured for receiving, engaging and locking a portion of the displacement members 60.

In these embodiments, the second cavities 90 are formed in a circle in a radial distance away from the axis A of the drive disc 50. Preferably, the one or more second cavities 90 is/are formed at the same distance from the central axis A as the first cavities 80 in the crank arm disc 41.

Preferably, the second cavities 90 are formed within a distance of less than a width/diameter of the second cavities from each other. The first cavities 80 may be formed considerably further apart. Thus, in most practical applications, there are considerably more second cavities 90 than there are first cavities 80 in the one-way clutch 1.

The displacement member 60 is slideably displaceable in the bearing 70 formed through the sprocket 30 between to positions:
- one position, where a portion of the displacement member 60 has entered into and engages (or locks into) a first cavity 80 of the crank arm disc 41, and
- another position, where a portion of the displacement member has entered into and engages (or locks into) a second cavity 90 of the drive disc 50.

In either position, a portion of the displacement member 60 remains engaged with a portion of the bearing 70. Thereby, the sprocket 30 is either engaged to rotate with the crank arm 40 or with the drive disc 50.

The Figs. 3A-F, as mentioned previously, show steps or stages during use of the one-way clutch 1.

Fig. 3A shows the components of the one-way clutch 1, i.e. the drive disc 50, the sprocket 30, and the crank arm disc 41, in a neutral or rest stage, where no force is applied to the pedals, and thereby no torque is transferred via the crank arm 40 to the drive shaft 20. The displacement member 60 is shown to reside partially within a first cavity 80. In this stage the electric motor 10 (via drive disc 50) may not transfer any force to the sprocket 30 or crank arm 40. The geometry of the first cavity is such that the displacement member 60 can be brought out of engagement/contact with the second cavity 90 in the drive disc 50.

In Fig. 3A it can be seen how the displacement member 60 is coupled to the crank arm 40, and that the drive disc 50 is prevented from transferring any forces to the displacement member 60, when the crank arm 40 is in the rest position.

The displacement member 60 may be biased, e.g. by magnetic forces, toward the position shown in Fig. 3A, such that in the rest position, the displacement member stays in a first cavity 80 due to the bias. However, in preferred embodiments, the displacement member is unbiasedly/freely slideable between the two positions in engagement with the crank arm or the drive disc, respectively.

The second cavities 90 of the drive disc 50 have a geometry, such that in stages/situations, where there is no trot in the pedals 105, but the motor 10 (the drive disc 50) is still rotating, the geometry provides a resulting force on the displacement member 60, such that it will be pushed away from the drive disc 50, and into the geometry of a first cavity 80 of the crank arm disc 41.

From Fig. 3A it will be appreciated, how room is made for the displacement member 60 in the first cavity 80, by a flat portion 81 of the surface of the first cavity 80.

When a person/user/bicyclist treads in the pedals 105, in the forward direction 110 - i.e. the direction that will cause the bicycle to move in a forward direction - contact is made between an edge 71 of the bearing 70 in the sprocket 30, the displacement member 60, and a sloping portion 82 of the surface of the first cavity 80 of the crank arm disc 41. This is illustrated in Fig. 3B, where the rotation induced by the trot in a pedal 105 in the forward direction is represented by an arrow 110. This is caused by a slight forward rotational movement of the crank arm disc 41 relative to the sprocket member 31, allowed by the protrusions 140 and slits 141 of the limitation mechanism mentioned in connection with Fig. 5.

In the situation in Fig. 3B, the sprocket 30 is influenced by a force, F_{sprocket} 130, from the endless chain 106, that will initially prevent the sprocket 30 from rotating when contact is made by the displacement member 60.

The force induced by the rotation of the crank arm 40, F_{crank} 131, has two components, one counteracting the force of the sprocket 30 in a tangential direction, F_{crankT} 132, and one in the axial direction, F_{crankA} 133, due to the sloping portion 82 of surface of the first cavity 80 of the crank arm disc 41.

As illustrated in Fig. 3B, the distribution of force will cause the displacement member 60 to be displaced in a direction towards the drive disc 50, as the users trot overcomes the frictional forces from the sprocket and chain (and causes a rotation of the sprocket).

Eventually, the force in the axial direction, F_{crankA} 133, will cause the displacement member 60 to slide into engagement with the second cavity 90 formed in the drive disc 50, whereby the sprocket 30 and the electric motor 10 are coupled.

When the displacement member 60 is engaging a second cavity 90 in the drive disc 50, the electrical motor 10 may transfer power to the sprocket 30 via the displacement member 60. This situation is illustrated in Fig. 3C. The motor 10 drives the drive disc 50 in the forward direction indicated by arrow 112 in Fig. 4C.

As can further be seen in Fig. 3C, the forward trot 110 in the pedals 105 has caused the crank arm disc 41 to be rotated forward relative to the sprocket 30. The above mentioned protrusions/studs/knobs 140 have moved in the slits/grooves/channels 141 to an extreme end thereof, whereby a surface portion 48 of the crank arm disc 41 adjacent to the first cavity 80 covers or is aligned with the bearing 70, and aids in maintaining the displacement member 60 in engagement with the second cavity 90 in the drive disc 50. The arrow 134 indicates the axially inwardly directed force of the crank arm disc 41 on the displacement member 60.

The arrow 135 indicates the force, F_{drive}, applied by the drive disc 50 on the displacement member 60. The force , F_{drive} 135, induced by the rotation 112 of the drive disc 50, has two components. A first component, F_{driveA}, illustrated by arrow 136, counteracts the axially inwardly directed force 134 of the crank arm disc 41 on the displacement member 60, in the axial direction. A second component, F_{driveT}, illustrated by arrow 137, provides a forward torque on the sprocket 30 - via the displacement member 60 - in a tangential direction.

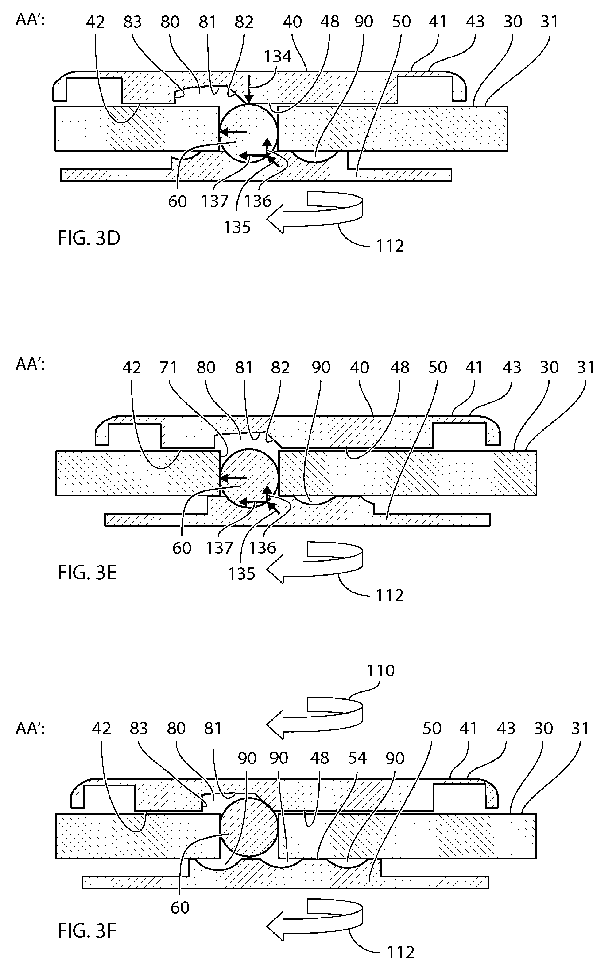

If the bicyclist stops rotating the pedals 105 (and thereby the crank arm 40 and the crank arm disc 41), the drive disc 50 will continue to rotate for a short while. This situation is shown in Fig. 3D, where arrow 112 indicates the forward rotation of the drive disc 50, whereas there is no arrow indicating the rotation of the crank arm disc 41. Thus, Fig. 3D shows the situation in the exact instant when the pedaling discontinues. Due to the forward thrust of the drive disc 50, F_{driveT} 137, a relative rotation between the sprocket 30 and the crank arm disc 41 will occur.

This will cause a movement of the above-mentioned protrusions/studs/knobs 140 towards the opposite end of the cooperating slits/grooves/channels 141 (relative to the situation shown in Fig. 3C), and towards a relative rotational situation between the crank arm disc 41 and the sprocket member 31 as shown in Fig. 3E, where the surface portion 48 of the crank arm disc 41 adjacent to the first cavity 80 no longer covers or is aligned with the bearing 70. Thereby, the first component, F_{driveA}, illustrated by arrow 136, of the force, F_{drive}, applied by the drive disc 50 on the displacement member 60, will cause an axial displacement of the displacement member 60 out of engagement with the second cavity 90 in the drive disc 50. Thereby, the discontinued pedaling will cause a disconnection of the motor 10 from the sprocket 30 and crank arm 40.

A torque sensor e.g. formed in the first cavity 80 of the crank arm disc 41 (not shown) or otherwise as indicated above, sends signals to control the force applied by the electric motor 10. Thus, as long as the bicyclist maintains a slight forward pedaling 110, then the rotational displacement between the crank arm disc 41 and the sprocket 30 shown in Figs 4C-D is maintained, keeping the drive disc in coupling with the sprocket 30. The arrow indicating the forward rotation movement in Fig. 3C follows the forward rotation of the drive disc 50, as indicated by arrow 112.

When the pedaling stops, the force from the drive disc 50 will push the displacement member 60 back towards the crank arm disc, and the electric motor 10 can no longer transfer any significant force. Since the relative rotation between the crank arm disc 41 and the sprocket 30 is immediate as a consequence of the discontinued pedaling, the torque from the electric motor 10 will immediately push the displacement member 60 back towards the crank arm disc 41, whereby a kick-back is prevented. As the displacement member 60 moves back towards the crank arm disc 41, the displacement member 60 will end in the same position as shown in Fig. 3A. We note that a similar relative movement between the sprocket 30 and the crank arm disc 41 will of course also occur if the pedaling is not only discontinued, but also reversed, such that the rotation of the crank arm 40 is in the opposite direction of arrow 110. This will activate the coaster brake of the bicycle.

In order to brake the bicycle, using the coaster brake, the rotation on the crank arm 40 is inversed relative to the indicated forward direction 110, shown in the figures. This will cause a movement of the above-mentioned protrusions/studs/knobs 140 all the way to the extreme end of the opposite end of the cooperating slits/grooves/channels 141 (relative to the situation shown in Fig. 3C). Therefore, a backward rotation (counter to arrow 110) of the crank arm 40 will cause a backwards rotation of the sprocket member 31 and thereby the sprocket 30 and the endless chain 106. The backward braking movement, as described above in relation to the discontinued pedaling, will of course also force the crank arm disc 41 and the sprocket member 31 towards a relative rotational situation as shown in Fig. 3E, where the surface portion 48 of the crank arm disc 41 adjacent to the first cavity no longer covers or is aligned with the bearing 70.

The discontinued pedaling or the braking, will cause the displacement member 60 to be pushed back to the position in engagement with the first cavity 80, i.e. the situation shown in Fig. 3A. When the displacement member 60 is in engagement with the first cavity 80, a backward rotation of the crank arm disc 41 will be transferred to the sprocket 30, and from there to the endless chain 106, which will activate the coaster brake build into the rear hub in conventional manner.

The shape of the surface at the end of the first cavity 80 opposite to the sloping portion 82 of the surface of the first cavity of the crank arm disc forms a sharp ledge 83. When the relative rotation is in the most extreme rearward position (as shown in Fig. 3A), the sharp ledge 83 is aligned with the inner wall of the bearing 70 and no forces push the displacement member out of engagement with the first cavity 80.

In some instances, when the bicyclist starts inducing a forward rotation 110, the displacement member 60 is not aligned with a second cavity 90 in the drive disc 50, but instead is located adjacent to an inter-cavity surface portion 54 of the drive disc 50, as shown in Fig. 4F. As the electric motor 10 starts rotating at even a slight trod in the pedals 105, and due to the input (a start-signal to the electric motor 10) from the torque sensor, this is not a problem. The crank arm disc 41 will rotate slower than the drive disc 50, and therefore the displacement member 60 and a second cavity 90 in the drive disc 50 will quickly come into alignment, and thereby be forced into engagement as described above.

Above, the function of the one-way clutch has been described in the context of the single first cavity 80, as shown in Figs. 3A-F. However, the person skilled in the art will realize that a number of first cavities 80 and a like number of corresponding displacement members 60 distributed as described in connection with Figs. 4 and 5 above may apply.

A common factor for the embodiments described above is that the displacement member 60 is displaceable in an axial direction between components arranged side by side in the axial direction, defined by the longitudinal axis A of the drive shaft 20.

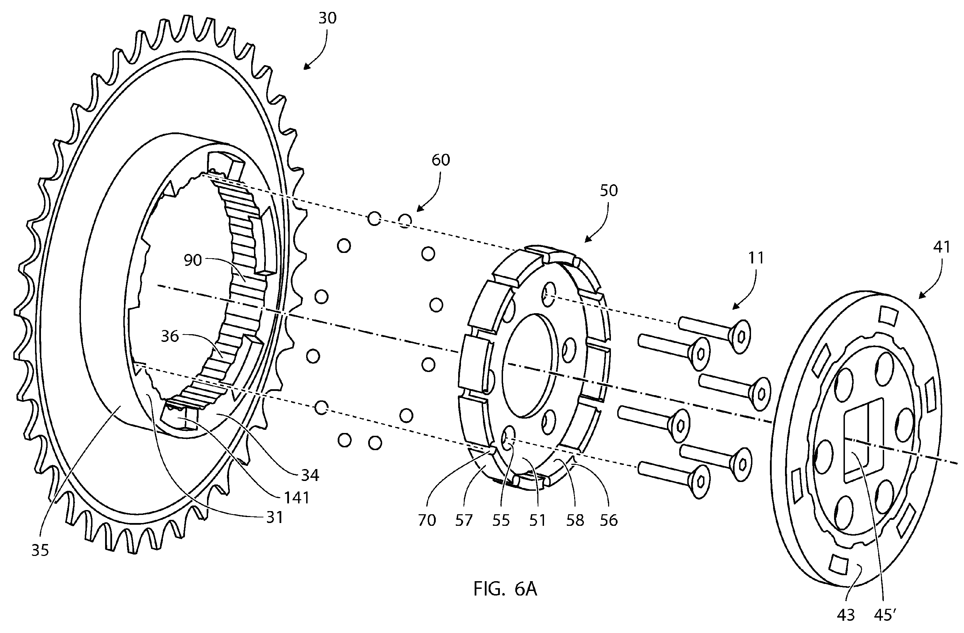

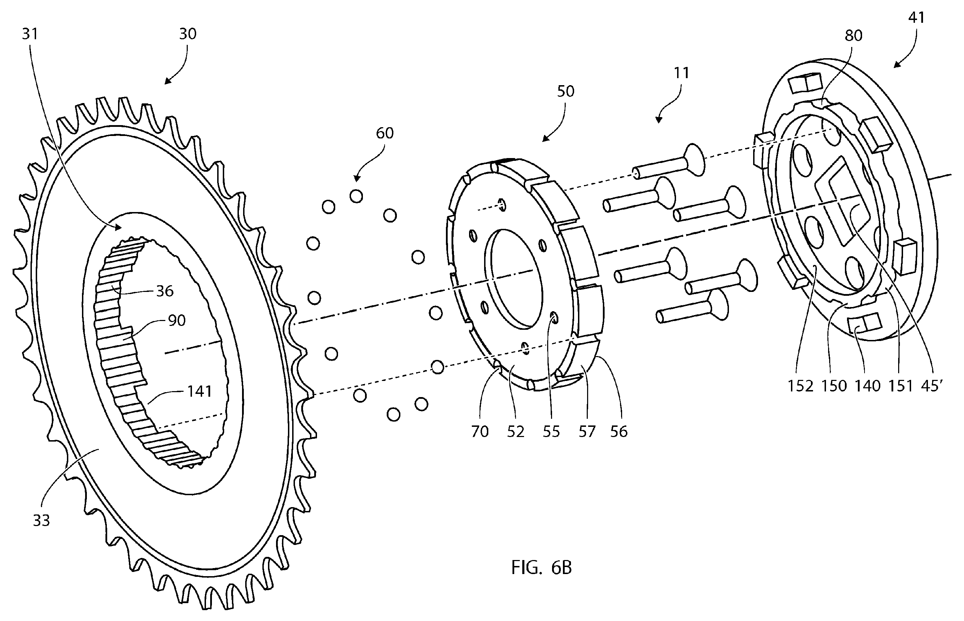

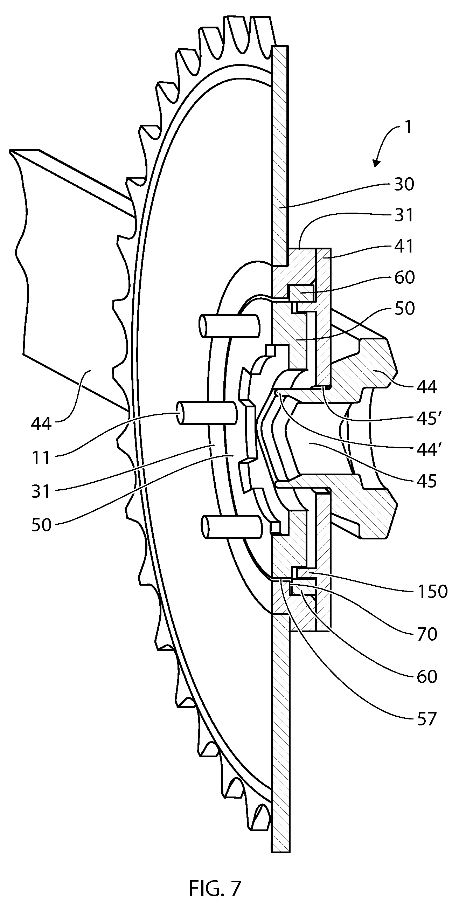

In the following, and with reference to Figs. 6-9, embodiments where a displacement member 60 of a one-way clutch 1 is displaceable in an radial direction of a sprocket 30, a crank arm disc 41 and a drive disc 50, is described. Elements having the same function as in the embodiments described above will be described using like reference numbers.

Figs. 6A-B shows a sprocket 30 with a sprocket member 31, a drive disc 50 and a crank arm 40, comprising a crank arm shaft 44 and a crank arm disc 41.

The sprocket member 31 may be formed integral with the sprocket 30, or preferably, the sprocket member 31 and the sprocket 30 may be formed as two separate but connectable components, as can be appreciated from Figs. 6-9. The two separate but connectable components may be connected in a rotation fast manner relative to each other. In the latter case, when the components are separate, the sprocket member 31 may form part of a replaceable unit or assembly forming the one-way clutch 1.

The sprocket member 31 comprises an inner side facing towards the frame 101 and electric motor 10 of the bicycle 100, and an outer side 34 facing the drive disc 50 and a crank arm 40. Further, the sprocket member 31 comprises a radially outer (radially outwardly facing) surface 35 and a radially inner (radially inwardly facing) surface 36.

The sprocket 30 and the sprocket member 31 may be rotation-fast connected in a number of ways, e.g. press fit, mechanical fasteners like screws or pals, or via corresponding shapes of a central aperture (not shown) of the sprocket 30 and the radially outer surface 35 of the sprocket member 31.

Also, the crank arm shaft 44 may be formed integral with the crank arm disc 41, or preferably, the crank arm shaft 44 and the crank arm disc 41 may be formed as two separate connectable components, that may be connected in a rotation fast manner relative to each other, as shown in Fig. 6. Thereby, the crank arm disc may form part of a unit or assembly forming the one-way clutch 1. The crank arm disc 41 of the crank arm 40 has an inner side/surface 42 facing towards the sprocket 30 with the sprocket member 31 and the drive disc 50, and an outer side/surface 43 facing the crank arm shaft 44.

A hole 47 for mounting a (not shown) pedal 105 further is shown in Figs. 6A-B.

Figs. 6A-B also show a center bore 45 for receiving the drive shaft 20 (not shown in Figs. 6A-B), the center bore 45 being formed in an radially central portion of the crank arm shaft 44 in a portion of the crank arm 40 forming a drive shaft connection member 49. The center bore 45 extends through the drive shaft connection member 49 of the crank arm shaft 44. The center bore 45 has a square cross-section, such that it may be mounted on the drive shaft 20 in a rotation fast manner, the drive shaft 20 having a corresponding square cross-sectional shape. In other embodiments (not shown), other corresponding cross-sectional shapes of the drive shaft 20 and center bore 45 may be utilized.

In embodiments where the crank arm disc 41 forms part of a replaceable one way clutch unit/assembly, the crank arm disc 41 preferably also has a central bore 45', which may be attached to drive shaft connection member 49. The central bore 45' allows the coaxial mounting of the crank arm disc 41 around the drive shaft connection member 49. The central bore 45' of the crank arm disc 41 may have a shape corresponding to a shape of an outer surface of the drive shaft connection member 49 in order to allow a rotation-fast connection thereto. In Figs. 6A-B, the central bore 45' is square and the drive shaft connection member 49 has a corresponding/mating square cross-section. In other embodiments (not shown), however, other matching shapes may be utilized. Also, various other types of mechanical connections, e.g. pals screws and the like may be utilized.

Thereby, the crank arm 40 and the crank arm disc 41 are mountable on the drive shaft 20 (which for simplicity is not shown in Figs. 6A-B) in a rotation fast manner relative to each other in such a way that a rotation of the crank arm 40 and the crank arm disc 41 (relative to the frame 101) will cause a rotation of the drive shaft 20.

The drive disc 50 is arranged between the sprocket member 31 and the crank arm disc 41. In the drive disc 50, one or more displacement members 60 are slideably displaceable, which will be described in further detail below.

The drive disc 50 may form an extension of the drive output 109, or - as shown - form a part which may be connected thereto. In Figs. 6-B a set of pins/screws 11 are shown. The pins 11 are receivable in apertures 55 through the drive disc 50 and may connect to corresponding connection means on/in the drive output 109.

As mentioned above, the drive disc 50, the sprocket member 31, the crank arm disc 41, and the displacement member(s) form part of the one-way clutch 1. They may form a replaceable unit/assembly, which is connectable to the sprocket 30 and the crank arm shaft 44 of an electrically powered bicycle 10.

The sprocket 30 and the sprocket member 31 are also mounted coaxially around the (not shown) drive shaft 20, such that the sprocket 30 with the sprocket member 31 is freely rotatable relative to the drive shaft 20, and coaxially with the crank arm disc 41, and with the drive disc 50.

However, the rotation of the sprocket 30 relative to the adjacent crank arm disc 41 (and thereby the crank arm 40), is limited, such that the relative rotation between the sprocket 30 and the crank arm disc 41 is only a few degrees, such as 5-30°.

In order to limit the rotational movement between the crank arm 40 and the sprocket member 31, one or more protrusions/studs/knobs 140 may be formed on either the sprocket member 31 or the crank arm 40, and extending in a direction towards the opposite one of the sprocket 30 and the crank arm 40. These protrusions/studs/knobs are configured to cooperate with respective elongate slits/grooves/channels 144 of a suitable length, formed in the sidewall or in an edge of the other of the sprocket 30 and the crank arm 40, which does not have the protrusions/studs/knobs formed in them.

In the embodiment shown in Figs. 6A-B, radially extending protrusions 140 are formed on the inner side/surface 42 of the crank arm disc 41. The protrusions cooperate with elongate slits 141 formed in the outwardly facing surface 34 of the sprocket member 31. It will be appreciated that the protrusions 140 and slits 141 may be reversed between crank arm disc 41 and the sprocket member 31 in other embodiments (not shown).

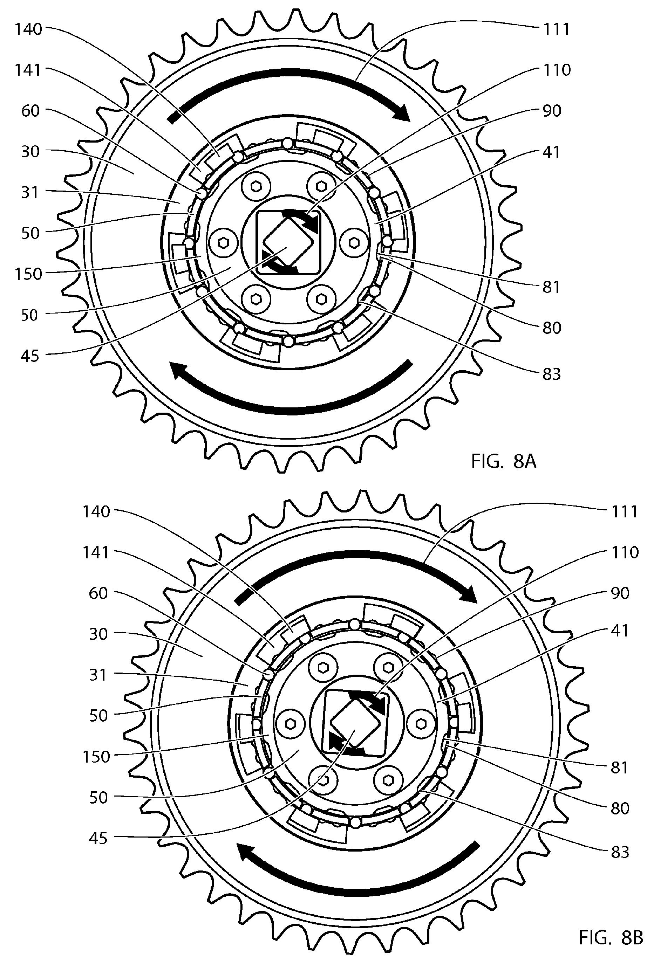

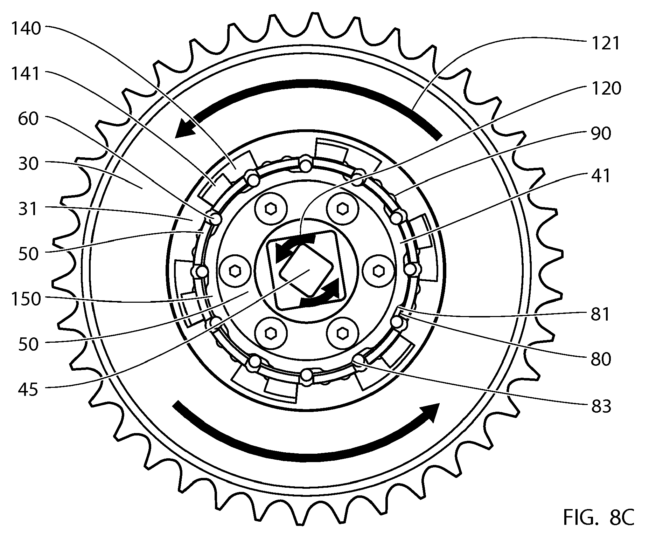

It will further be appreciated from Figs. 6A-B that the slits 141, having a finite length will secure a limited rotational movement between the crank arm 40 and the sprocket 30/sprocket member 31, by the protrusions 140 being slideably displaceable from one end of the slits 141 to another. The length of each of the slits/grooves/channels 141 is configured such that the relative moment is limited between two extreme positions shown in Fig. 8B and Fig. 8C, respectively, as will be explained in further detail below. The limitation is a consequence of the protrusions/studs/knobs 140 reaching the ends of the elongate slits/grooves/channels 141.

Also shown in Figs. 6A-B, the drive disc 50 has a first side/surface 51 facing the crank arm 40 and a second side/surface 52, facing the sprocket 30 with the sprocket member 31, and a circumferential rim 53. The drive disc 50 in this embodiment further comprises a ring-shaped flange 56 extending in the axial direction from the first surfaces 51, i.e. perpendicularly relative to the surfaces 51, 52 of the drive disc 50. The ring-shaped flange 56 comprises a radially outer (radially outwardly facing) surface 57 and a radially inner (radially inwardly facing) surface 58. The ring-shaped flange 56 may - as shown in this embodiment - be formed at the outer periphery of the drive disc 50.

At least one hole/aperture may be formed in a radial direction through the flange 56 of the drive disc 50, from the radially outer (radially outwardly facing) surface 57 and to the radially inner (radially inwardly facing) surface 58. The at least one hole/aperture forming a bearing 70 configured for slideably guiding a displacement member 60 in a radial direction. The displacement member 60, in the form of cylindrical object, is arranged snugly in the bearing 70, and displaceable in the radial direction perpendicular to the longitudinal axis A of the drive shaft 20.

In the shown embodiment there are twelve bearings 70, and corresponding displacement members 60, but another number is also conceivable, e.g. 8-20.

Fig. 6B further shows that the inwardly facing surface 42 of the crank arm disc 41 has a ring-shaped crank flange 150. The ring-shaped crank flange 150 extends in an axial direction from the inwardly facing surface. The ring-shaped crank flange 150 comprises a radially outer (radially outwardly facing) surface 151 and a radially inner (radially inwardly facing) surface 152.

Fig. 6B further shows that twelve first cavities 80 or indentations are formed in the radially outer (radially outwardly facing) surface 151 of the ring-shaped crank flange 150 of the crank arm disc 41. In other embodiments (not shown), another number of first indentations may be used, such as 8-11 or 13-20. As mentioned above, at least one first cavity 80 is arranged in the crank arm disc 41. The number of first cavities 80 in the crank arm disc 41 matches the number of bearings 70 in the drive disc 50. The first cavities 80 are formed in a circle in a radial distance away from the axis A of the crank arm disc 41 (as defined through the middle of the center hole 45, and coinciding with the longitudinal axis A, of the drive shaft 20 when the crank arm disc 41 is mounted thereon).

The at least one first cavity 80 is shaped and sized and located such that it is/they are configured to receive a portion of the displacement member 60. The shape of the first cavity/cavities 80 is described in further detail below.

The radially inner surface 36 of the sprocket member 31 comprises one or more engagement sockets, formed as second cavities 90, preferably in the form of concave indentations formed in the radially inner surface 36. The second cavities 90 preferably form concave, part-cylindrical indentations in the radially inner surface 36, or at least with a shape corresponding to an outer surface of a portion of the displacement member(s) 60. The second cavities 90 thereby are configured for receiving, engaging and locking a portion of the displacement members 60.

In these embodiments, the second cavities 90 are formed in a circle in a radial distance away from the axis A of the inner surface 36 of the sprocket member 31.

Preferably, a plurality of second cavities 90 are formed in the radially inner surface 36 of the sprocket member 31, one next to the other. The second cavities 90 are formed within a distance of less than a width/diameter of the second cavities 90 from each other. As shown, the first cavities 80 may be formed considerably further apart. Thus, in most practical applications, there are considerably more second cavities 90 than there are first cavities 80 in the one-way clutch 1.

The drive disc 50 and the sprocket member 31 are sized and configured such that the radially outer surface 57 of the peripheral ring-shaped flange 56 on the drive disc 50 fits into, and can be brought into close proximity with the radially inner surface 36 of the sprocket member 31, and in such a way that the drive disc 50 can rotate inside and relative to the sprocket member 31. Since the second cavities 90 are formed as depressions/indentations in the radially inner surface 36 of the sprocket member 31, the bearings 70 formed through the drive disc 50 and terminating in the radially outer surface 57 of the peripheral ring-shaped flange 56 of the drive disc 50, the bearings 70 can be brought into alignment with the second cavities 90.

Further, the drive disc 50 and the crank arm disc 41 are sized and configured such that the radially inner surface 58 of the peripheral ring-shaped flange 56 on the drive disc 50 fits over the ring-shaped crank flange 150 of the crank arm disc 41, such that the radially inner surface 58 of the peripheral ring-shaped flange 56 is adjacent to the radially outer surface 151 of the ring-shaped crank flange 150 of the crank arm disc 41, and in such a way that the drive disc 50 can rotate relative to the crank arm disc 41. Since the first cavities 80 are formed as depressions/indentations in the radially outer surface 151 of the ring-shaped crank flange 150 of the crank arm disc 41, the bearings 70 formed through the drive disc 50 and terminating in the radially inner surface 58 of the peripheral ring-shaped flange 56 of the drive disc 50, the bearings 70 can be brought into alignment with the first cavities 80.

The displacement member 60 is slideably displaceable in the bearing 70 formed through the drive disc 50 in a radial direction between two positions:
- one position, where a portion of the displacement member 60 has entered into and engages (or locks into) a first cavity 80 of the crank arm disc 41, and
- another position, where a portion of the displacement member has entered into and engages (or locks into) a second cavity 90 in the radially inner surface 36 of the sprocket member 31.

In either position, a portion of the displacement member 60 remains engaged with a portion of the bearing 70. Thereby, the drive disc 50 in this embodiment is either engaged with the crank arm 40 or with the sprocket member 31.

The Figs. 8A-C, as previously mentioned, show steps or stages during use of the one-way clutch 1.

Figs. 8A-C show the sprocket 30 with the sprocket member 31, the crank arm 40 with the crank arm disc 41, the drive wheel 50, and the displacement members 60 in a partial vertical section. For simplicity certain parts, such as the crank arm, have been cut away.

Fig. 8A shows a situation/stage/step where a bicyclist/user is initially providing a forward trot/pedaling in the pedals 105. This is represented with an arrow 110.

The forward direction 110 is the direction that will cause the bicycle to move in a forward direction.

The first cavities 80 are formed as elongate (along a circumferential direction) depressions/indentations in the radially outer surface 151 of the ring-shaped crank flange 150 of the crank arm disc 41, each cavity 80 having a tangential extension corresponding to 1½-2 times the diameter/maximum extension (in the radial direction) of a displacement member 60. Thereby, each of the first cavities have a flat bottom or inner surface portion 81. In at least one end of each of the first cavities 80 a gently sloping ledge 82 is formed, providing a gradual transition from the flat bottom or inner surface portion 81 to the radially outer surface 151 of the ring-shaped crank flange 150 of the crank arm disc 41.

Since the first cavities 80 have an elongate shape, a relative rotation between the crank arm disc 41 and the drive disc 50 is allowed until the displacement members 60 come into contact with the gently sloping ledge 82.

Thereby, when the forward rotation 110 of the crank arm 40 commences, the displacement members 60 are pushed out of the first cavities 80 by the gently sloping ledge 82, in a radially outward direction, and towards the second cavities 90 formed in the radially inner surface 36 of the sprocket member 31. The torque in the crank arm 40 is sensed by a sensor 160 located e.g. on the crank arm 40 as shown in Fig. 2 or otherwise as suggested above. The sensor activates the electric motor 10.

Thereby the electric motor 10 is connected to the sprocket member 31, and thereby to the endless chain 106 etc. as is the case with the Figs. 3-5 embodiments, described above. This is also illustrated in Fig. 8A by the arrow 111 showing the rotation of the sprocket 30 in forward direction.

As the forward trot/forward pedaling 110 is continued by the bicyclist/user, the situation/stage/step shown in Fig. 8B will occur.

As can be seen in Fig. 8B, the forward trot in the pedals 105 has caused the crank arm disc 41 to be rotated forward relative to the sprocket member 31. The above-mentioned protrusions/studs/knobs 140 have moved in the slits/grooves/channels 141 to an extreme end thereof. Thereby, a surface portion 48 of the radially outer surface 151 of the crank arm disc 41 adjacent to the first cavity 80 covers or is aligned with the bearing 70, and aids in maintaining the displacement member 60 in engagement with the second cavity 90 in sprocket member 31.

As long as the bicyclist/user maintains even a slight rotation in crank arm 40, the sensor sensors the movement, and maintains the drive of the electric motor 10.

A situation where the bicyclist/user stops pedaling or activates the coaster brake by a rearward trot, is shown in Fig. 8C. In Fig. 8C the rearward trot is indicated by the arrow 120, showing a rearwards rotation of the crank arm 40, i.e. a rotation opposite to the rotation indicated by arrow 110 in Figs 8A-B.

When the rearward rotation 120 of the crank arm 40 and thereby the crank arm disc 41 is commenced or the pedaling is simply discontinued, a relative rotational movement between the sprocket member 31 and the crank arm disc 41 will occur due to torque in the drive disc 50. This will bring the protrusions/studs/knobs 140 out of engagement with the extreme end of the corresponding slits/grooves/channels 141, and in motion towards the opposite extreme end of the slits/grooves/channels 141. Thereby, the surface portion 48 of the radially outer surface 151 of the crank arm disc 41 adjacent to the first cavities 80 is rotated away from covering/out of alignment with the bearings of the drive disc. Therefore, the displacement members 60 are no longer forced into engagement with the second cavities 90. As a consequence thereof, and due to the shape of the second cavities 90, the displacement members 60 are pushed out of engagement with the second cavities 90 and in a radial inward direction towards the first cavities in the crank arm disc 41. This will bring the drive disc 50, and thereby the electric motor 10, out of engagement with the sprocket 30, and the drive of the chain is thereby discontinued when there is no pedaling or a backward pedaling (braking) 120.

When the sensor 160, senses that there is no longer any forward rotation of the crank arm 40, the electric motor 10 is turned of.

The arrangement of the one-way clutch 1 allows the quick disengagement of the drive between the drive disc 50 and the sprocket member 31, whereby - even with a delay in the response time from the sensor 160, the sensor senses the discontinued (or rearward) pedaling to the time the electric motor is turned of - the bicyclist/user will not experience a kick-back in the pedals 105.

Fig. 8C shows the situation where a rearward rotation 120 of the crank arm 40 has been induced by the user/bicyclist, in order to activate the coaster brake of the electrically powered bicycle 100. In Fig. 8C the protrusions/studs/knobs 140 have been brought out of engagement with the forward extreme end of the corresponding slits/grooves/channels 141, as shown in Fig. 9B, and have been brought into contact with the opposite extreme back end of the slits/grooves/channels 141. This allows a transfer of force from the crank arm disc to the sprocket member 31 (with the drive disc 50 decoupled from the sprocket member 31). Thereby, the backward rotation 120 of the crank arm 40 is transferred to the sprocket member 31, the sprocket 30, and to the endless chain 106. This will cause an activation of the coaster brake mechanism of the rear wheel 103 hub. The arrow 121 in Fig. 8C. indicates the rearward rotation of the sprocket.

Although the teachings of this invention have been described in detail for the purpose of illustration, it is understood that such detail is solely for that purpose, and variations can be made therein by those skilled in the art without departing from the scope of the teachings of this invention.

The term "comprising" as used in the claims does not exclude other elements or steps. The term "a" or "an" as used in the claims does not exclude a plurality.

### List of reference numbers

A longitudinal axis of drive shaft
1 clutch
10 electric motor/electric center motor
11 drive pins
20 drive shaft
30 sprocket
31 sprocket member
32 central throughgoing aperture in sprocket or sprocket member
33 inner side of sprocket member
34 outer side of sprocket member
35 radially outer surface of the sprocket member
36 radially inner surface of the sprocket member
40 crank arm
41 crank arm disc
42 inner side/surface or axially inwardly facing side/surface of crank arm disc
43 outer side/surface or axially outwardly facing side/surface of crank arm disc
44 crank arm shaft
44' crank arm connection member
45 center bore of crank arm
45' center bore of crank arm disc
46 outer circumferential rim of the crank arm disc
47 hole for mounting a pedal
48 surface portion of crank arm disc adjacent to the first cavities
49 drive shaft connection member of the crank arm
50 drive disc
51 first side/surface or axially outwardly facing side/surface of drive disc
52 second side/surface or axially inwardly facing side/surface of drive disc
53 circumferential rim of drive disc
54 inter-cavity surface portion of the drive disc
55 apertures in the drive disc
56 ring-shaped flange on the drive disc
57 radially outer (radially outwardly facing) surface of the ring-shaped flange of the
drive disc
58 radially inner (radially inwardly facing) surface of the ring-shaped flange of the
drive disc
60 displacement member
70 first bearing
71 edge of the bearing
80 first cavity
81 flat portion of the inner surface of the first cavity
82 sloping portion of the inner surface of the first cavity of the crank arm disc
83 sharp ledge in first cavity 80 opposite to the sloping portion 82
90 second cavity
100 electrically powered bicycle
101 frame
102 front wheel
103 rear wheel
104 handle bar
105 pedals
106 endless chain
107 rear sprocket
109 drive output
110 arrow showing rotation of crank arm in forward direction
111 arrow showing rotation of the sprocket in forward direction (first direction)
112 arrow showing rotation of drive disc in forward direction (first direction)
113 saddle
114 seat post
115 rear luggage carrier
120 arrow showing rotation of crank arm in rearward direction (second direction)
121 arrow showing rotation of chain sprocket wheel in rearward direction (second direction)
130 force, F_{sprocket}, from the endless chain Z, influencing the sprocket
131 force, F_{crank}, induced by the rotation of the crank arm
132 component of force (F_{crank}) in a tangential direction, F_{crankT}
133 component of force (F_{crank}) in an axial direction, F_{crankA}
134 force applied by the crank arm disc on the displacement member in axial direction
135 force, F_{drive}, applied by the drive disc 50 on the displacement member 60
136 component, F_{driveA}, of force (F_{drive}) in the axial direction
137 component, F_{driveT}, of force (F_{drive}) in tangential direction.
140 protrusions
141 slits
150 ring-shaped crank flange on crank arm disc
151 radially outer (radially outwardly facing) surface of ring-shaped crank flange
152 radially inner (radially inwardly facing) surface of ring-shaped crank flange
160 sensor

## Claims

1. A one-way clutch (1) for connecting and disconnecting an electric center motor (10) to and from a drive of an electrically powered bicycle (100) with a coaster brake, said drive comprising
- a drive shaft (20) having a longitudinal axis (A);
- a sprocket (30) arranged coaxially with the drive shaft (20);
- a crank arm (40) arranged on the drive shaft (20); and
- an endless chain (106) arranged over said sprocket (30),
wherein the one-way clutch (1) comprises
- a sprocket member (31) for transferring rotation from the one-way clutch (1) to the sprocket (30);
- a crank arm disc (41) for transferring rotation from said crank arm (40) to said sprocket (30);
- a drive disc (50) for transferring rotation from the electric center motor (10) to said sprocket (30), said drive disc (50) being rotatable relative to the crank arm disc (41) and said sprocket member (31);
- at least one displacement member (60) journaled in a bearing (70) through a portion of either the sprocket member (31) or the drive disc (50);
- a first cavity (80) formed in a portion of said crank arm disc (41), and configured to receive and engage a first portion of said engagement member (60); and
- a plurality of second cavities (90) configured to receive and engage a second portion of said engagement member (60),
wherein said plurality of second cavities (90) is formed in the opposite of the sprocket members (31) or the drive disc (50), wherein the at least one bearing (70) is formed, and
wherein said at least one engagement member (60) is linearly slideably relative to said bearing (70) between
- a first position, where a first portion of the engagement member (60) is received in and engages a first cavity (80), and where the engagement member (60) is disengaged from any of the second cavities (90); and
- a second position, where a second portion of the engagement member (60) is received in and engages a second cavity (90), and where the engagement member (60) is disengaged from the first cavity (80).

2. The one-way clutch (1) according to claim 1, wherein said first cavity (80) is shaped such that the engagement member (60) is forced out of engagement with said first cavity (80) and toward engagement with said second cavity (90) when said crank arm (40) is rotated in a first direction, and wherein the second cavity (90) is shaped such that the engagement member (60) is forced out of engagement with said second cavity (90) and toward engagement with said first cavity (80) when said crank arm (40) is rotated in a second direction opposite to said first direction.

3. The one-way clutch (1) according to claim 2, wherein the at least one displacement member (60) is displaceable from said at least one first cavity (80) by a ledge (82), forming a transition from a straight bottom surface portion (81) of said at least one first cavity (80) and a surface (48, 151) of said crank arm disc (41) in which the at least one first cavity (80) is formed.

4. The one-way clutch (1) according to any one of the preceding claims, wherein said crank arm disc (41) is rotatable relative to said sprocket member (31) in a limited angle only.

5. The one-way clutch (1) according to claim 4 wherein said limited rotation is provided by at least one protrusion (140) on one of the sprocket members (31) or the crank arm disc (41), said at least one protrusion being configured for cooperating with at least one slit (141) provided in the other of the sprocket member (31) or the crank arm disc (41).

6. The one-way clutch (1) according to any one of the preceding claims, wherein said sprocket member (31), said crank arm disc (41), said drive disc (50), and said displacement member (60) forms an exchangeable entity, where said sprocket member (31) comprises means for rotation-fast connection to said sprocket (30), where said crank arm disc (41) comprises means for rotation-fast connection to said crank arm 40, and wherein said drive disc (50) comprises means for connecting to a drive output (109) of said electric center motor (10).

7. The one-way clutch (1) according to any one of the preceding claims, wherein said displacement member (60) is slideable in an axial direction parallel to said axis (A) of the drive shaft (20).

8. The one-way clutch (1) according to claim 7, wherein said at least one bearing (70) is formed through said sprocket member (31), where at least one first cavity (80) is formed in an axially inwardly facing surface (42) of the crank arm disc (41), and where said second cavities (90) are formed in an axially outwardly facing surface (51) of the drive disc (50).

9. The one-way clutch (1) according to any one of the claims 1-6, wherein said displacement member (60) is slideable in an radial direction perpendicular to said axis (A) of the drive shaft (20).

10. The one-way clutch (1) according to claim 9, wherein said at least one bearing (70) is formed through said drive disc (50), where the at least one first cavity (80) is formed in a radially outwardly facing surface (151) of a ring-shaped crank flange (150) of the crank arm member (41), and where said plurality of second cavities (90) is formed in an radially inwardly facing surface (36) of said crank arm member (31).

11. The one-way clutch (1) according to any one of the preceding claims, wherein there is one first cavity (80) for every one displacement member (60) and every one bearing (70).

12. An electrically powered bicycle (100) with a coaster brake, and a one-way clutch (1) for connecting and disconnecting an electric center motor (10) to and from engagement with a drive of the electrically powered bicycle (100), said drive comprising
- a drive shaft (20) having a longitudinal axis (A);
- a sprocket (30) arranged coaxially with the drive shaft (20);
- a crank arm (40) arranged on the drive shaft (20); and
- an endless chain (106) arranged over said sprocket (30),
wherein the one-way clutch (1) comprises
- a sprocket member (31) for transferring rotation from the one-way clutch (1) to the sprocket (30);
- a crank arm disc (41) for transferring rotation from said crank arm (40) to said sprocket (30);
- a drive disc (50) for transferring rotation from the electric center motor (10) to said sprocket (30), said drive disc (50) being rotatable relative to the crank arm disc (41) and said sprocket member (31);
- at least one displacement member (60) journaled in a bearing (70) through a portion of either the sprocket member (31) or the drive disc (50);
- a first cavity (80) formed in a portion of said crank arm disc (41), and configured to receive and engage a first portion of said displacement member (60); and
- a plurality of second cavities (90) configured to receive and engage a second portion of said displacement member (60),
wherein said plurality of second cavities (90) are formed in the opposite of the sprocket member (31) or the drive disc (50), wherein the at least one bearing (70) is formed, and wherein said at least one displacement member (60) is linearly slideably relative to said to said bearing (70) between
- a first position, where a first portion of the displacement member (60) is received in and engages a first cavity (80), and where the displacement member (60) is disengaged from any of the second cavities (90); and
- a second position, where a second portion of the displacement member (60) is received in and engages one of said second cavities (90), and where the engagement member (60) is disengaged from the first cavity (80).

13. The electrically powered bicycle (100) according to claim 12, wherein a sensor (160) is arranged in connection with the drive of the electrically powered bicycle (100), and wherein said sensor (160) is configured for turning on the electric center motor (10) when a forward rotation (110) of the crank arm (40) is detected by the sensor, and for turning off the electric center motor (10) when no rotation or a backwards rotation (120) of the crank arm (40) is detected by the sensor.

14. A method of connecting and disconnecting an electric center motor (10) to and from engagement with a drive of an electrically powered bicycle (100) with a coaster brake, by a one-way clutch (1), said drive comprising
- a drive shaft (20) having a longitudinal axis (A);
- a sprocket (30) arranged coaxially with the drive shaft (20);
- a crank arm (40) arranged on the drive shaft (20); and
- an endless chain (106) arranged over said sprocket (30),
wherein the one-way clutch (1) comprises
- a sprocket member (31) for transferring rotation from the one-way clutch (1) to the sprocket (30);
- a crank arm disc (41) for transferring rotation from said crank arm (40) to said sprocket (30);
- a drive disc (50) for transferring rotation from the electric center motor (10) to said sprocket (30), said drive disc (50) being rotatable relative to the crank arm disc (41) and said sprocket member (31);
- at least one displacement member (60) journaled in a bearing (70) through a portion of either the sprocket member (31) or the drive disc (50);
- a first cavity (80) formed in a portion of said crank arm disc (41), and configured to receive and engage a first portion of said displacement member (60); and
- a plurality of second cavities (90) configured to receive and engage a second portion of said displacement member (60),
wherein said plurality of second cavities (90) are formed in the opposite of the sprocket member (31) or the drive disc (50) wherein the at least one bearing (70) is formed, and wherein said method comprises linearly sliding said at least one displacement member (60) relative to said bearing (70), between
- a first position, where a first portion of the displacement member (60) is received in and engages a first cavity (80), and where the displacement member (60) is disengaged from any one of the second cavities (90) to disconnect the electric motor (10) from the drive; and
- a second position, where a second portion of the displacement member (60) is received in and engages one of said second cavities (90), and where the displacement member (60) is disengaged from the first cavity (80) to connect the electric center motor (10) to the drive.
